# EUROPEAN PATENT APPLICATION

(11) **EP 1 876 668 A2**
(43) Date of publication of application: **09.01.2008**
(21) Application number: 07252723.7
(22) Date of filing: 06.07.2007
(51) Int. Cl.: H01M 10/00

(54) **Sheet-type secondary battery and manufacturing method therefor**

(30) Priority: 06.07.2006 JP 2006186804; 25.04.2007 JP 2007115505
(71) Applicant: Enax, Inc., Bunkyo-ku, Tokyo 112-0013 (JP)
(72) Inventor: Abe, Kiyoko, c/o Enax Inc.Yonezawa Laboratory, Yonezawa-shi, Yamagata 992-0003 (JP); Takahashi, Kazuhiro, c/o Enax Inc.,Yonezawa Laboratory, Yonezawa-shi, Yamagata 992-0003 (JP); Ozawa, Kazunori, c/o Enax Inc., Tokyo 112-0013 (JP)
(74) Representative: Hague, Alison Jane

(57) **Abstract**

Provided is a sheet-type secondary battery capable of preventing damage to sheet-type electrodes when the sheet-type electrodes are connected, and also allowing an arbitrary number of the sheet-type electrodes to be laminated so as to easily realize a high-capacity sheet-type secondary battery and a manufacturing method therefor. In the sheet-type secondary battery, connecting parts between a positive electrode lead (3 a) and multiple sheet-type positive electrodes (11) and between a negative electrode lead (3b) and multiple sheet-type negative electrodes (13) are formed by laminating the multiple sheet-type positive electrodes (11) and the multiple sheet-type negative electrodes (13) on the corresponding positive electrode lead (3a) and on the corresponding negative electrode lead (3b), respectively, to thereby establish the connections therebetween, and the connection parts each have a conductive connection protective layer formed in between the laminated multiple sheet-type positive and/or negative electrodes.

## Description

The present invention relates to a sheet-type secondary battery and a manufacturing method therefor. In particular, although not limited to these, the present invention relates to a sheet-type secondary battery which is suitably used for applications such as electric automobiles, uninterruptible power supply (UPS), and load leveling of electricity, and a manufacturing method therefor.

Along with a strong demand for a reduction of size and weight of various electronic devices in recent years, there has been a need for an upgraded secondary battery as a power source, and various batteries have been developed and improved. The battery is expected to be improved to have a high-voltage property, a high-energy density property, resistance to a high load, a degree of freedom of design, secured safety, and the like. Under the circumstances, of the existing batteries, a lithium ion secondary battery is most excellent as being capable of realizing high voltage, high-energy density, and resistance to a high load, and improvements are still being made actively to this day.

The lithium ion secondary battery generally includes a sheet-type inner electrode couple which is formed by including a sheet-type positive electrode formed of a positive power collector sheet having a positive electrode active material applied on the surface thereof and a sheet-type negative electrode formed of a negative power collector sheet having a negative electrode active material applied on the surface thereof, the sheet-type positive electrode and the sheet-type negative electrode being laminated through a separator, a battery case for airtightly covering the inner electrode couple and containing therein an electrolyte solution, and a positive electrode lead and a negative electrode lead each being connecting from the positive electrode and the negative electrode of the inner electrode couple in the battery case to a positive terminal and a negative terminal provided to the battery case. In a case of charging, lithium leaves from the positive electrode active material of the positive electrode as lithium ions to seep into the electrolyte solution so as to get into the negative electrode active material of the negative electrode, and in a case of discharging, the lithium ions which have gotten into the negative electrode active material are discharged in the electrolyte solution so as to go back to the positive electrode active material of the positive electrode again, to thereby perform charging and discharging. The lithium ion secondary battery as described above is capable of attaining a high-energy density, and therefore, it is expected to be used as a high-capacity secondary battery in the field of an electric vehicle or a hybrid vehicle, and many developments and proposals therefor have already been made.

For example, as the lithium ion secondary battery as described above, there has been proposed a lithium ion sheet-type secondary battery of light weight, thin, and flexible, which is formed by including a flexible outer wrapper made by using a laminated film of trilaminar structure, in which a sheet-shaped inner electrode couple and an electrolyte solution are enclosed (refer to, for example, JP 2003-331816 A and JP 2004-178860 A).

According to the sheet-type secondary battery disclosed in JP 2003-331816 A and JP 2004-178860 A, the battery case uses a laminated film of trilaminar structure having an inner surface layer of thermoplastic resin, such as polyethylene or polypropylene, which is excellent in tolerance with respect to an electrolyte solution and in heat sealing property, for the inner surface side, an intermediate layer of a metal foil such as an aluminum foil, which is excellent in flexibility and strength, in the middle, and.an outer layer made of an insulating resin, such as a polyamide resin, which is excellent in electrical insulation properties, for the outer surface side, so as to enclose the sheet-shaped inner electrode couple and the electrolyte solution therein to form a battery. Further, a positive electrode lead and a negative electrode lead are provided in a pair, the positive electrode lead and the negative electrode lead respectively connecting each of multiple positive electrodes and multiple negative electrodes constituting the inner electrode couple, and portions at which the pair of the positive electrode and the negative electrode airtightly penetrates the laminated film so as to protrude outwardly are used as electrode terminals or outer leads.

In the meantime, there is an increasing demand for a further compact, high-capacity, highly efficient, and long-life secondary battery, and the sheet-type secondary battery is also desired to be increased in efficiency and battery life along with the increased capacity and the reduced resistance due to the increased layers of the sheet-type electrodes and the adoption of an electrode terminal (hereinafter, also referred to as "electrode lead") large in cross-sectional area (having a large thickness).

In response to the above-mentioned demands, the sheet-type secondary battery according to JP 2003-331816 A and JP 2004-178860 A adopts ultrasonic welding for connecting the sheet-type electrode and the electrode lead. The ultrasonic welding has an advantage over resistance welding and laser welding in terms of reducing a connection resistance and cost, or improving resistance to vibration. However, according to the ultrasonic welding, there has been a problem in that a welding condition greatly varies depending on a thickness of the electrode lead and a lamination thickness of the laminated sheet-type electrodes, and materials thereof. In other words, there has been a problem in that it is difficult to set an appropriate welding condition depending on a thickness and a hardness of the electrode lead and the sheet-type electrode serving as a workpiece.

For example, an excessive welding energy applied in order to attain a sufficient welding strength may lead to a problem in that, for example, a crack or a fracture is generated in the sheet-type electrode. Further, the sheet-type electrode thus damaged by a crack or a fracture results in a malfunction such as peeling off of the electrode or a short-circuit between the electrodes due to the vibration or the like. On the other hand, an insufficient welding energy may result in an insufficient welding strength to be attained, which leads to a problem of an increase in a battery resistance due to a contact failure.

The above-mentioned problems become particularly prominent as the thickness of the workpiece increases, that is, the thickness of the electrode lead and/or the lamination thickness of the sheet-type electrodes increase

Specifically, according to the sheet-type secondary battery disclosed in JP 2003-331816 A and JP 2004-178860 A which airtightly contains the inner electrode couple, in a case of ultrasonic welding the electrode lead and the laminated metal foil sheet-type electrodes, which are increased in a cross-sectional area (thickness) for the purpose of realizing high-output, high-capacity, and low-resistance, there has been a problem in that it is difficult to attain a sufficient connection strength without breaking the electrode lead and the sheet-type electrode, in particular, without giving damage such as wear and tear to the thin sheet-type electrode. Also, for the above-mentioned reason, the number of the sheet-type electrodes to be laminated is limited under a predetermined welding condition, in order to be appropriately joined to the electrode lead terminal, which hampers the realization of a high-capacity sheet-type secondary battery.

The present invention has been made in view of the above-mentioned problems inherent in the prior art, and therefore, it is an object of the invention to provide a sheet-type secondary battery capable of preventing damage to sheet-type electrodes when power collector foils constituting of a sheet-type positive electrode and a sheet-type negative electrode, and a positive electrode lead and a negative electrode lead are connected to each other while easily setting a condition for appropriate welding and also allowing an arbitrary number of the sheet-type electrodes to be laminated so as to easily realize a high-capacity sheet-type secondary battery, and a manufacturing method therefor.

In order to attain the above-mentioned object, a sheet-type secondary battery according to the present invention includes:
a sheet-type inner electrode couple formed by alternately laminating multiple sheet-type positive electrodes and multiple sheet-type negative electrodes through a separator;
a flexible outer wrapper for containing airtightly therein the inner electrode couple and an electrolyte solution; and
a positive electrode lead and a negative electrode lead connected to each of the multiple sheet-type positive electrodes and the multiple sheet-type negative electrodes of the inner electrode couple in the outer wrapper, wherein:
   connection parts between the positive electrode lead and the multiple sheet-type positive electrodes and between the negative electrode lead and the multiple sheet-type negative electrodes are formed by laminating the multiple sheet-type positive electrodes and the multiple sheet-type negative electrodes on the corresponding positive electrode lead and on the corresponding negative electrode lead, respectively, to thereby establish the connections therebetween; and
   the connection parts each have a conductive connection protective layer formed in between the laminated multiple sheet-type positive and/or negative electrodes.

In general, in order to attain a high-capacity and low-resistance sheet-type secondary battery, it is required to provide an electrode lead large in thickness (large in a cross-sectional area) and a multilayered sheet-type electrode. However, the increased thickness of the electrode lead and the sheet-type electrode, which are welded to be connected to each other, makes it difficult to set an appropriate welding strength, and it has been found, based on the study by the inventors, that there occur remarkable problems including a contact failure due to an insufficient welding strength and cracks generated in the sheet-type electrode due to an excessive welding energy.

Therefore, according to the sheet-type secondary battery of the present invention structured as described above, the connection parts between the positive electrode lead and the multiple sheet-type positive electrodes and between the negative electrode lead and the multiple sheet-type negative electrodes are formed by laminating the multiple sheet-type positive electrodes and the multiple sheet-type negative electrodes on the corresponding positive electrode lead and on the corresponding negative electrode lead, respectively, to thereby establish the connections therebetween; and the connection parts each have a conductive connection protective layer formed in between the laminated multiple sheet-type positive and/or negative electrodes, which makes it possible to prevent damage to the sheet-type electrodes when the sheet-type electrode is connected, to easily set an appropriate welding condition, and also to allow an arbitrary number of the sheet-type electrodes to be laminated. Accordingly, it is possible to realize a sheet-type secondary battery capable of being increased in capacity with ease.

Further, in the sheet-type secondary battery, power collector foils of the multiple sheet-type positive electrodes and power collector foils of the sheet-type negative electrodes may be ultrasonically welded to the corresponding positive electrode lead and to the corresponding negative electrode lead, respectively, in a state where the connection protective layer is formed so as to be inserted in between the power collector foils in a lamination direction thereof (in between the laminated power collector foils).

With the above-mentioned structure, it is possible to prevent damage to the sheet-type electrode when the sheet-type electrode is connected, which should be particularly concerned in performing ultrasonic welding.

Further, in the sheet-type secondary battery, a connection protective layer may be formed for every predetermined number of the multiple sheet-type positive and/or negative electrodes laminated.

According to the above-mentioned structure, a connection protective layer is formed for every predetermined number of the sheet-type electrodes laminated, which makes it possible to more appropriately perform connection in accordance with a welding condition without giving damage to the sheet-type positive electrode and the sheet-type negative electrode.

Further, in the sheet-type secondary battery, the number of the multiple sheet-type positive and/or negative electrodes to be laminated may be set based on a welding strength.

With the above-mentioned structure, it is possible to set an appropriate welding strength with ease.

Further, in the sheet-type secondary battery, the connection protective layers may be further formed at end portions of the multiple sheet-type positive and/or negative electrodes in a lamination direction thereof opposite to the positive and/or negative electrode lead.

According to the above-mentioned structure, the connection protective layer also is formed at the end portions of the sheet-type electrodes in a lamination direction thereof, which makes it possible to effectively protect the end portion with respect to the direction of lamination of the sheet-type electrodes, the end portion being most susceptible to damage when the sheet-type positive and/or negative electrodes are laminated and connected to the corresponding electrode lead.

Further, in the sheet-type secondary battery, the connection protective layer may be formed of a conductive material separately from the multiple sheet-type positive and/or negative electrodes.

Further, in the sheet-type secondary battery, the connection protective layer may be formed of at least one of the multiple sheet-type positive and/or negative electrodes, which is folded back at the connection part.

According to the above-mentioned structure, the connection protective layer is formed of the sheet-type electrode, which is folded back at the connection part, which make it easy to realize the connection protective layer.

Further, in the sheet-type secondary battery, each of the connection protective layers may be formed of a member made of a material similar to that of the corresponding multiple sheet-type positive electrodes and that of the corresponding multiple sheet-type negative electrodes.

According to the above-mentioned structure, each conductive protective layer is formed of a member made of a material similar to that of the corresponding one of the laminated sheet-type positive electrodes and that of the corresponding the laminated sheet-type negative electrodes, which makes it possible to reduce a connection resistance at the connection part as compared with the case of connecting members made of different materials.

As described above, the sheet-type secondary battery according to the present invention can suitably be applied to a sheet-type secondary battery which projects a large current and includes the positive lead and the negative lead each having a thickness of from 0.3 mm or more to 5.0 mm or less, and can also suitably be applied to a sheet-type secondary battery which includes the sheet-type positive electrode and the sheet-type negative electrode each having a thickness of from 5 µm or more to 30 µm or less and where there is a fear of damage or the like when connecting the thin sheet-type positive and/or negative electrodes each laminated by 20 sheets or more.

In this case, the thickness of the sheet-type electrode refers to the thickness of the power collector foil itself, which does not include the thickness of the active material laminated on both sides of the power collector foil.

In addition, a manufacturing method for the sheet-type secondary battery according to the present invention includes:
preparing a sheet-type inner electrode couple which is formed by alternately laminating multiple sheet-type positive electrodes and multiple sheet-type negative electrodes through a separator, a positive electrode lead and a negative electrode lead connected to each of the multiple sheet-type positive electrodes and the multiple sheet-type negative electrodes of the inner electrode couple, and an outer wrapper for containing airtightly therein the inner electrode couple and an electrolyte solution,
putting together the multiple sheet-type positive and/or negative electrodes into groups to form multiple bundles of the multiple sheet-type positive and/or negative electrodes;
placing a first one of the multiple bundles of the sheet-type positive and/or negative electrodes on the positive and/or negative electrode lead;
placing a metal foil formed of a material the same as or similar to that of the multiple sheet-type positive and/or negative electrodes, on top of the first one of the multiple bundles of the multiple sheet-type positive and/or negative electrodes;
collectively subjecting the multiple bundles of the multiple sheet-type positive and/or negative electrodes, the positive and/or negative electrode lead, and the metal foil to ultrasonic welding;
placing a second one of the multiple bundles of the multiple sheet-type positive and/or negative electrodes on the first one of the multiple bundles of the multiple sheet-type positive and/or negative electrodes and the metal foil, which were welded;
placing and ultrasonic welding a metal foil on the second one of the multiple bundles of the multiple sheet-type positive and/or negative electrodes, the metal foil being made of a material the same as or similar to that of the multiple sheet-type positive and/or negative electrodes;
repeating the procedure similar to the above to laminate a desired number of sheet-type electrode layers through the metal foil; and
airtightly containing the inner electrode couple and the positive and/or negative electrode lead integrally connected to the sheet-type electrode layers of the inner electrode couple in the outer wrapper together with the electrolyte solution.

According to the above-mentioned manufacturing method of the present invention, which includes: putting together the multiple sheet-type electrodes into groups to form the multiple bundles of the sheet-type electrodes, placing a first one of the bundles of the sheet type electrodes on the electrode lead, placing a metal foil formed of a material similar to that of the sheet-type electrode, on top of the first bundle of the sheet-type electrodes, and collectively subjecting the bundle of the sheet-type electrodes, the electrode lead, and the metal foil to ultrasonic welding; and further placing a second one of the bundles of the sheet-type electrodes on the metal foil welded with the first bundle of the sheet-type electrodes, placing and ultrasonic welding a metal foil on the second bundle of the sheet-type electrodes, the metal foil being formed of a material similar to that of the sheet-type electrode, and repeating the procedure similar to the above to laminate a desired number of sheet-type electrode layers through the metal foil, it is possible to prevent damage to the sheet-type electrode when the sheet-type electrode is connected and is also possible to laminate an arbitrary number of sheet-type electrodes, to thereby provide a manufacturing method for easily producing a high-capacity sheet-type secondary battery.

Also, in the manufacturing method for a sheet-type secondary battery, the multiple bundles of the multiple sheet-type positive and/or negative electrodes may be divided into two or more bundles.

In this case, the sheet-type electrodes are divided into two or more bundles, which makes it possible to provide a manufacturing method for a sheet-type secondary battery that can be suitably applied to a case of performing lamination connection through overlap welding.

Also, in the manufacturing method for a sheet-type secondary battery, at least one of the multiple sheet-type positive and/or negative electrodes, which is formed at top of each of the multiple bundles of the multiple sheet-type positive and/or negative electrodes, may be folded back.

With the above-mentioned structure, it is possible to set an appropriate welding condition and to realize the connection protective layer for preventing damage with ease.

Further, in the manufacturing method for a sheet-type secondary battery, preferably the positive and/or negative electrode lead has a thickness of from 0.3 mm or more to 5.0 mm or less, the metal foil has a total thickness of from 10 µm or more to 100 µm or less, and the positive and/or negative electrode lead and the metal foil are ultrasonically welded so as to cover a predetermined ultrasonic welding area.

Note that the total thickness refers to the thickness of the metal foil in a case where a single sheet of the metal foil is used. In a case where multiple metal foils are laminated for use, the lamination thickness thereof corresponds to the total thickness.

In this case, the electrode lead has a thickness of from 0.3 mm or more to 0.5 mm or less and the metal sheet has a total thickness of from 10 µm or more to 100 µm or less, and the electrode lead and the metal foil are ultrasonic welded so as to cover a predetermined ultrasonic welding area, which makes it possible to provide a manufacturing method for a high-capacity sheet-type secondary battery suitable as a large-capacity battery while securing a necessary connection strength.

Further, at least preferably in the manufacturing method for a sheet-type secondary battery, the welding area of the first one of the multiple bundles of the multiple sheet-type positive and/or negative electrodes and the welding area of the second one of the multiple bundles of the multiple sheet-type positive and/or negative electrodes are welded to each other through the metal foil.

In this case, the welding area of the first bundle of the sheet-type electrodes and the welding area of the second bundle of the sheet-type electrodes are welded to each other through the metal foil, to thereby reliably secure a predetermined current capacity.

According to the present invention, it is possible to provide a sheet-type secondary battery capable of preventing damage to a sheet-type electrode when the sheet-type electrode is connected and also allowing an arbitrary number of the sheet-type electrodes to be laminated so as to easily realize a high-capacity sheet-type secondary battery, and a manufacturing method therefor.

Embodiments of the invention will now be described, by way of example only, with reference to the accompanying drawings, wherein:
FIG. 1 is a perspective view schematically showing a sheet-type secondary battery according to an embodiment of the present invention;
FIG. 2 is a left side view of the sheet-type secondary battery of FIG. 1;
FIG. 3 is a cross-sectional view of the sheet-type secondary battery taken along the line A-A of FIG. 1, which is an enlarged view of a portion enclosed by the circle A' of FIG. 2;
FIG. 4 is a schematic enlarged view for explaining an inner electrode couple of FIG. 1;
FIG. 5 is a schematic enlarged view showing a structure of a connection between the power collector foil and electrode leads;
FIG. 6 is a schematic view for explaining an outline of ultrasonic welding adopted by the present invention;
FIG. 7 is a schematic view for explaining a manufacturing method for the sheet-type secondary battery according to an embodiment of the present invention;
FIG. 8 is a schematic view for explaining the manufacturing method for the sheet-type secondary battery according to an embodiment of the present invention;
FIG. 9 is a schematic view for explaining a manufacturing method for the sheet-type secondary battery according to an embodiment of the present invention; and
FIG. 10 is a schematic view for explaining a manufacturing method for the sheet-type secondary battery according to another embodiment of the present invention.

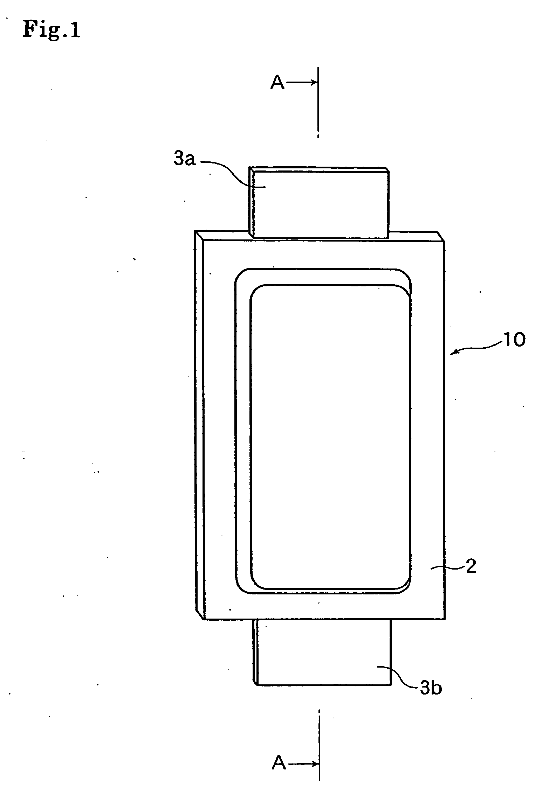

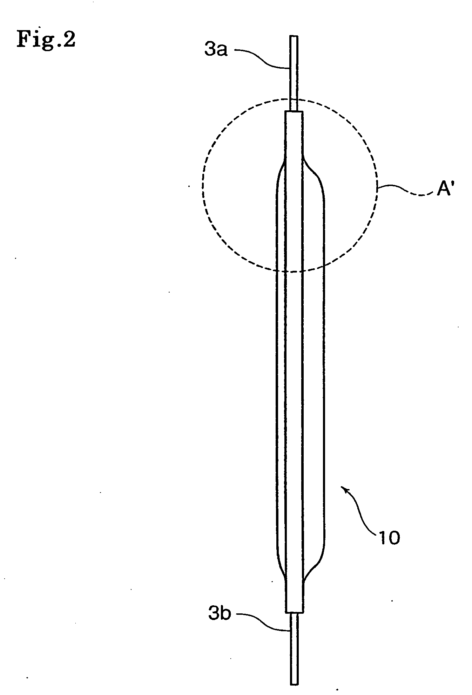

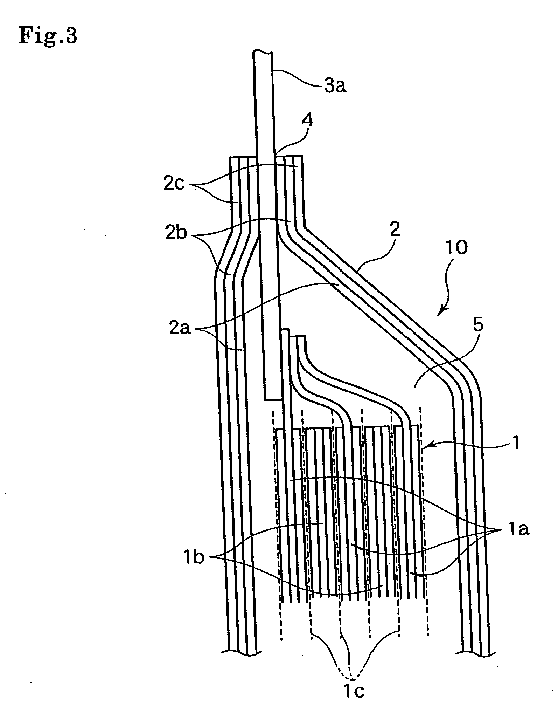

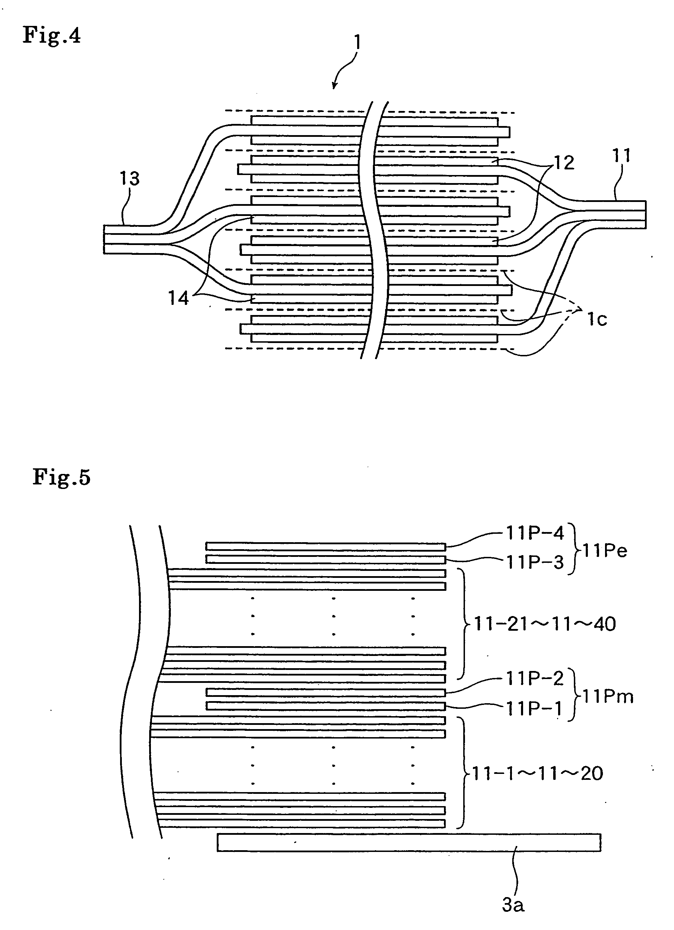

Hereinbelow, an embodiment of the present invention is described with reference to FIGS. 1 to 4. FIG. 1 is a perspective view schematically showing an example of a sheet-type secondary battery according to the present invention, and FIG. 2 is a left side view of the sheet-type secondary battery of FIG. 1. FIG. 3 is a cross-sectional view of the sheet-type secondary battery taken along the line A-A of FIG. 1, which is a view showing an enlarged portion enclosed by the circle A' of FIG. 2, and FIG. 4 is a schematic view for explaining an inner electrode couple.

In FIGS. 1 to 3, reference numeral 10 denotes a lithium-ion sheet-type secondary battery (sheet-type secondary battery) which includes an inner electrode couple 1 and an electrolyte solution 5 which are airtightly sealed to be internally contained by a flexible outer wrapper 2. The inner electrode couple 1 is formed in a sheet shape as shown in FIG. 3, in which multiple sheet-type positive electrodes 1a and multiple sheet-type negative electrodes 1b are alternately laminated through separators 1c, and a sheet-type positive electrode lead 3a which connects to each of the positive electrodes 1a of the inner electrode couple 1 airtightly penetrates a heat seal portion 4 of the outer wrapper 2 while being fixed to the heat seal portion 4, and protrudes outwardly of the outer wrapper 2. Meanwhile, though not shown in the drawing, a negative electrode lead 3b connects to each of the negative electrodes 1b, and the negative electrode lead 3b is formed in such a manner as shown in Fig. 1 that the negative electrode lead 3b penetrates the heat seal portion 4, similarly to the positive electrode lead 3a, to airtightly protrude outwardly of the outer wrapper 2 at an end portion opposing the positive electrode lead 3a (according to this example, a lower end portion in the drawing) across the outer wrapper 2.

According to the present invention, a material for the flexible outer wrapper 2 which airtightly contains therein the inner electrode couple 1 and the electrolyte solution 5 is not particularly limited, as long as the material is strong enough to be used as a battery case of the sheet-type secondary battery 10 while exhibiting an excellent tolerance with respect to the electrolyte solution 5 to be contained therein. A specific example of the package 2 includes a flexible outer wrapper formed by using a laminated film of a trilaminar structure (refer to domestic re-publication of PCT international publication for patent application 98/042,036). The laminated film is formed by using: an inner surface layer made of a thermoplastic resin, such as polyethylene, polypropylene, polyamide, or ionomer, which is excellent in tolerance with respect to the electrolyte solution and in heat sealing property, for the inner surface side; an intermediate layer made of a metal foil, such as an aluminum foil or an stainless foil, which is excellent in flexibility and strength, in the middle; and an outer layer made of an insulating resin, such as a polyamide resin or polyester resin, which is excellent in electrical insulation properties, for the outer surface side.

According to this embodiment, the outer wrapper 2 is formed of a laminated film of a trilaminar structure, which includes an inner layer 2a made of polyethylene on the inner surface side, an intermediate layer 2b made of aluminum foil in the middle, and an outer layer 2c made of nylon on the outer surface side.

The separator 1c may take any form as long as it has an insulating property and is strong enough to be closely adhered to the positive electrode 1a and to the negative electrode 1b Examples of the form include a porous film, a nonwoven fabric, or a net. The material therefor is not specifically limited, but a single-layered porous film of polyethylene or polypropylene, or a multilayer porous film thereof are preferred in view of adhesiveness and safety.

Further, as a solvent and an electrolyte salt provided for the electrolyte solution 5 used as an ion conductor, a non-aqueous solvent and an electrolyte salt containing lithium used in a conventional battery can be used. Specifically, as the solvent, a single solution of: esters such as ethylene carbonate, propylene carbonate, dimethyl carbonate, diethyl carbonate, or methylethyl carbonate; and ethers such as dimethoxyethane, diethoxyethane, diethylether, or dimethylether, and a mixed solution of two kinds composed of the above-mentioned solvents of the same system or solvents of different systems. As the electrolyte salt, LiPF₆, LiAsF₆, LiClO₄, LiBF₄, LiCF₃SO₃, LiN(CF₃SO₂)₂, LiC(CF₃SO₂)₃, LiN(C₂F₅SO2)₂, or the like can be used.

According to this embodiment, as shown in FIG. 4, in the inner electrode couple 1, the positive electrodes 1a are each formed by laminating positive electrode active materials 12 on both sides of a positive power collector 11 made of aluminum, and similarly, the negative electrodes 1b are each formed by laminating negative electrode active materials 14 on both sides of a negative power collector 13 made of copper. More specifically, according to this embodiment, the positive power collector 11 forming each sheet-type positive electrode 1a is formed of an extra-thin aluminum foil of about 5 µm to 30 µm in thickness, and the negative power collector 13 forming each sheet-type negative electrode 1b is formed of an extra-thin copper foil of about 5 µm to 30 µm in thickness. Metal foil sheets corresponding to the positive power collector 11 and the negative power collector 13 are alternately laminated by, for example, 40 sheets through the separator 1c, to thereby form the inner electrode couple 1. Further, the positive electrode lead 3a is formed of aluminum, similarly to the positive power collector 11, and the negative electrode lead 3 is formed of copper or nickel, similarly to the negative power collector 13. However, the materials for the leads are not limited thereto, and it is desirable to use a metal material which is electrochemically stable. In particular, preferred examples for the positive electrode lead 3a include aluminum and aluminum alloy, and preferred examples for the negative electrode lead 3b include copper, stainless steel, and nickel. As for the positive electrode lead 3a, it is particularly preferable to use a material, for example, aluminum, which is similar to the material for forming the positive power collector. As for the negative electrode lead 3b, it is particularly preferable to use a material such as copper and/or nickel.

According to this embodiment, the positive electrode lead 3a and the negative electrode lead 3b are both 0.3 mm in thickness and 30 mm in width. The sheet-type secondary battery 10 according to the illustrated embodiment is suitably adopted by, for example, an electric automobile, which projects a large current, and therefore, in the illustrated embodiment, it is preferable to use sheet terminals each having a thickness of from 0.3 mm or more to 5.0 mm or less for the positive electrode lead 3a and the negative electrode lead 3b from the viewpoint of providing the lead with an enough thickness so as to be subjected to ultrasonic welding.

Next, the connection part between the inner electrode couple 1 and one of the positive electrode lead 3a and the negative electrode 3b is further described with reference to FIG. 5. FIG. 5 is an enlarged view schematically showing a structure of the connection part between each lead portion and the inner electrode couple. The connection part on the positive side and the connection part on the negative side are similarly structured, and therefore, the connection part on the positive side is cited as an example to be described in below.

As shown in FIG. 5, multiple positive power collector sheets (hereinafter, also referred to as "positive power collector foils") 11-1 to 11-40 made of, for example, aluminum, which constitute the multiple sheet-type positive electrodes are laminated on the positive electrode lead 3a through protective foils 11P-1 to 11P-4 and integrally connected to one another through ultrasonic welding. Specifically, the positive power collector foils 11-1 to 11-20 and 11-21 to 11-40 are laminated (connected) through the protective foils 11P-1 and 11P-2 inserted therebetween, the protective foils 11P-1 and 11P-2 being formed of metal (aluminium in this example), which is similar to the metal used for the positive power collector foils 11, and provided separately from the positive power collector foils 11. On the positive power collector foil 11-40 at the top, the protective foil 11P-3 and the protective foil 11P-4 are laminated (connected), the protective foils 11P-3 and 11P-4 being separately formed of a similar material. The protective foils 11P-1 and 11P-2 form a connection protective layer (hereinafter, also referred to as "middle connection protective layer 11Pm") provided in between the positive power collector foils in the direction of laminating, and the protective foils 11P-3 and 11P-4 form a connection protective layer (hereinafter, also referred to as "end connection protective layer 11Pe") provided at the end portion in the direction of lamination (end portion opposing to the positive electrode lead 3a). The connection on the negative side has a similar structure, in which connection protective layers 13Pm and 13Pe are formed of a material (such as copper) similar to the material used for the multiple negative power collector sheets (hereinafter, also referred to as "negative power collector foils") 13. Each of the power collector foils is not applied with an active material at the connection part.

The number of the power collector foils 11 and 13 and the protective foil 11P, 13P may be arbitrarily set. However, from the viewpoint of preventing damage such as wear and tear to the power collector foils 11 and 13 when each power collector foil is connected, it is preferable to form (insert) a connection protective layer 11P,13P each time the power collector foils 11-1, 11-2 ..., 13-1, 13-2 ..., are laminated to have a predetermined thickness (for example, 0.3 mm or more).

In the sheet-type secondary battery 10 according to an embodiment structured as described above, the connection protective layer 11Pm (13Pm) is formed in between the laminated power collector foils 11 (13) in the laminating direction thereof at the connection part between the power collector foils 11 (13) and the electrode lead 3 a (3b). Accordingly, in a case of manufacturing the sheet-type secondary battery 10 by a manufacturing method described below, it is possible to prevent a crack from being caused by a subsidence due to a pressure applied for connecting each piece of the power collector foils 11 (13) to one another, without giving damage to each of the collector foils 11 (13), and is also possible to laminate an arbitrary number of the power collector foils, thereby making it possible to easily realize a compact and large-capacity sheet-type secondary battery. Further, the connection protective layer 11Pe (13Pe) is formed at the end portion in the direction of lamination, thereby making it possible to effectively protect the end portion of the laminated power collector foils, the end portion being susceptible to damage when applied with a pressure for connection.

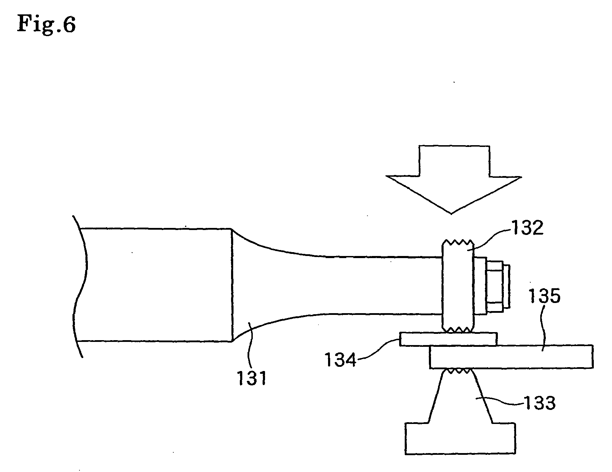

Next, a manufacturing method for the sheet-type secondary battery 10 according to an embodiment of the present invention is described with reference to the accompanying drawings. First, ultrasonic welding adopted by the manufacturing method is described with reference to FIG. 6. FIG. 6 is a schematic structural view of an ultrasonic welding device for explaining an outline of the ultrasonic welding.

As shown in FIG. 6, the ultrasonic welding device includes a horn 131, a chip 132 provided to a tip of the horn 131, and an anvil 133 opposed to the chip 132. Two members to be connected (a member 134 on the horn side and a member 135 on the anvil side) are stacked and placed between the chip 132 and the anvil 133, which are sandwiched by the chip 132 and the anvil 133 to be applied with a pressure. In this state, when an ultrasonic vibration is given to the horn 131, the chip 132 vibrates in a direction substantially parallel with a work surface of the anvil 133. In this manner, the ultrasonic vibration is transferred to the member 134 on the horn side and the member 135 on the anvil side through the chip 132, whereby the member 134 and the member 135 are connected due to a contact surface effect, a work effect, and a thermal effect.

According to the above-mentioned ultrasonic welding, it is possible to perform welding without melting a welding interface or to perform welding by melting only an extremely limited thin layer of the welding interface, and is also characterized by having a feature that it is possible to expect a cleaning effect to be produced by friction applied to impurities such as an oxide film in the welding interface. Accordingly, it is possible to reduce the resistance in the connection, and also to connect with stability the members to each other with reliability at low cost over a wide area, without giving substantial damage to the member to be connected.

According to this embodiment, the laminated power collector foils 11(13) and the electrode lead 3a (3b) are each placed as the member 134 on the horn side and the member 135 on the anvil side, respectively, so as to be subjected to ultrasonic welding.

Meanwhile, in a case of laminating the power collector foils 11 (13), each of which is formed in a thin metal foil with a thickness of about 5 µm to 30 µm, and connecting the laminated power collector foils 11 (13) to the electrode lead 3a (3b), an appropriate welding condition varies depending on the thickness of the electrode lead 3a (3b), the number of the power collector foils 11 (13) and the lamination thickness thereof, and the materials thereof.

In particular, in the case of laminating and connecting the thin power collector foils 11 (13) on the electrode lead 3a (3b) which is large in cross-sectional area (thickness) for the purpose of increasing the capacity thereof, a welding failure such as a crack in the foil is liable to occur. For this reason, there is a limitation on the number of the power collector foils 11(13) that can be appropriately laminated and connected under a predetermined welding condition, which hampers the realization of a large capacity battery..In contrast, in the case of performing each welding for a small number of the power collector foils 11 (13), the welding must be performed many times, which increases the number of process steps in the manufacture, with the result that the productivity is greatly decreased.

Specifically, in the case of using the electrode lead 3a (3b) terminal having a thickness of 0.3 mm or more for the purpose of outputting a large current and of reducing a resistance, and subjecting the electrode lead 3a (3b) and the multilayered power collector foils 11 (13) to ultrasonic welding, the multilayered power collector foils 11 (13) having a lamination thickness (total thickness) T = t * x (in which t: a thickness of each piece of the power collector foils, x: the number of the power collector foils; 5 ≤ t ≤ 30 µm, x ≥ 20 sheets) of 0.3 mm or more, it has been found based on the study made by the inventors that the thickness of the workpiece is likely to cause a problem of destruction of the power collector foils 11 (13) or a shortage of welding strength, which makes it difficult to determine an appropriate condition for welding. Also, in a state where the power collector foils 11 (13) are actually laminated, the power collector foils of the same polarity (for example, the positive power collector foils 11) are laminated through the power collector foils of the opposite polarity (for example, the negative power collector foils 13) and the separators 1c, which provides a gap of about 50 µm to 200 µm between the power collector foils of the same polarity at the connection part with the electrode lead 3a (3b), to which the power collector foils are connected through ultrasonic welding. Owing to this structure, in the case where the power collector foils have a lamination thickness of 0.3 mm or more, each piece of the power collector foils sinks deeper at the connection part as compared with the case of performing ultrasonic welding to the power collector foils obtained by simply laminating each piece in the same thickness and number. As a result, a crack is liable to occur in the foil along with a welded portion (in the vicinity of the edge of the border of a predetermined welding area). In particular, it has been found, based on the study made by the inventors, that a crack is liable to occur in the power collector foils provided at the end portion in the direction of lamination (an end portion opposing to the electrode lead) when being subjected to welding connection.

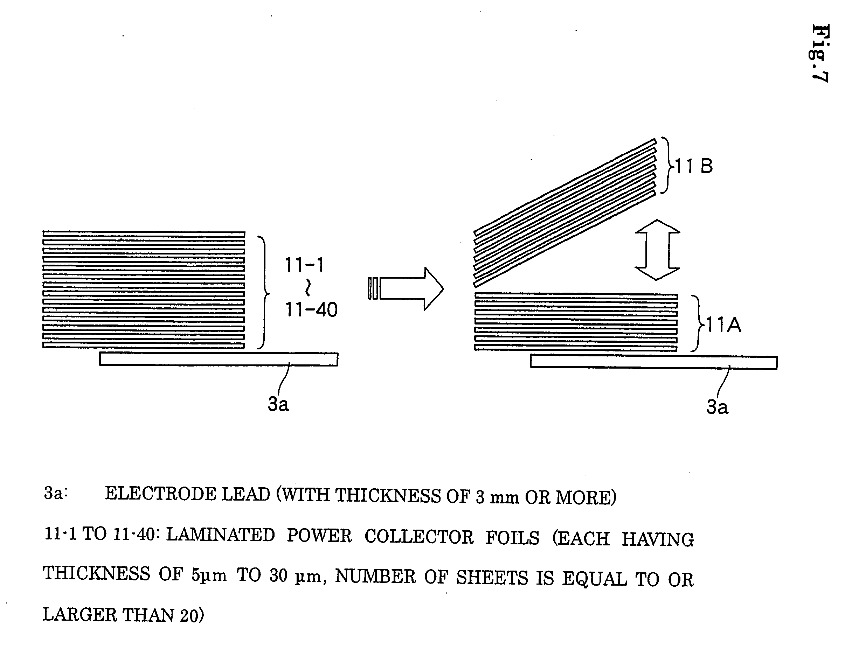

In view of the above, according to an embodiment of the manufacturing method for the sheet-type secondary battery 10 of the present invention, the electrode lead 3a (3b) and the power collector foils 11 (13) are connected through the connection protective layer 11P (13P) in the manner as described below, to thereby make it possible to laminate an arbitrary number of the power collector foils 11 (13) while preventing damage to the power collector foils 11 (13) when connecting the electrode lead 3a (3b) and the power collector foils 11 (13) to each other. Hereinbelow, the manufacturing method for the sheet-type secondary battery 10 according to an embodiment of the present invention is described by citing the positive side as an example, with reference to FIGS. 7 to 9.

First, as shown in FIG. 7, for example, 40 sheets of the power collector foils 11-1 to 11-40 each having a thickness of 5 µm to 30 µm are divided into groups of several sheets, to thereby form power collector bundles. According to this embodiment, the power collector foils 11-1 to 11-40 are divided into groups of 20 sheets, for example, to thereby form a power collector bundle 11A and a power collector bundle 11B.

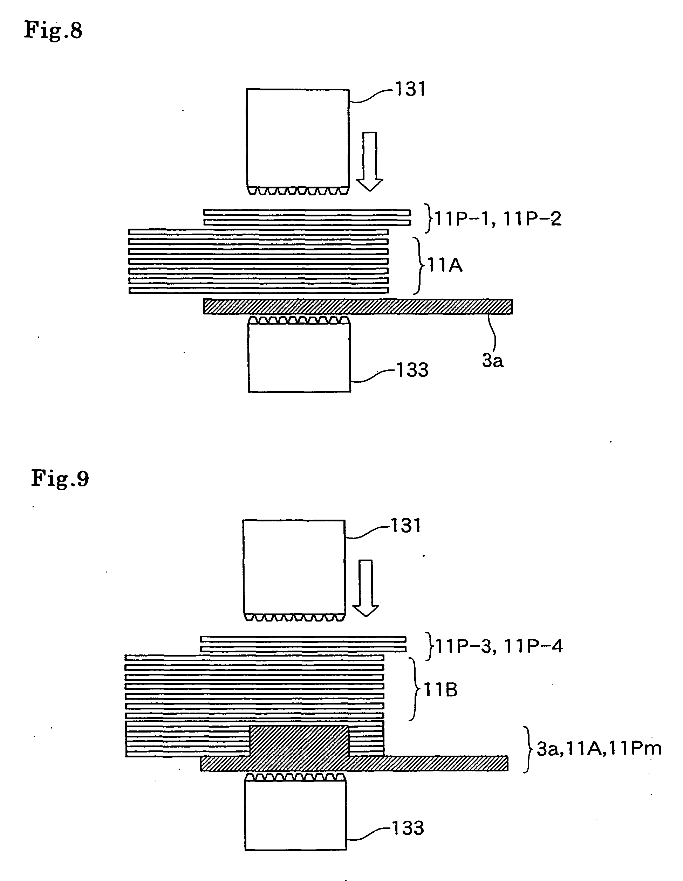

Next, the electrode lead 3a having a thickness of 0.3 mm or more is provided, and as shown in FIG. 8, the electrode lead 3a, the power collector bundle 11A, and the metal foils 11P-1 and 11P-2 forming the middle connection protective layer 11Pm are set between the ultrasonic horn 131 and the anvil 133, to thereby collectively subject the electrode lead 3a, the power collector bundle 11A, and the middle connection protective layer 11Pm to ultrasonic welding. Specifically, the electrode lead 3a is placed on the anvil 133, the power collector bundle 11A is laminated on the electrode lead 3a, and further, the metal foils 11P-1 and 11P-2 are placed thereon for protecting the power collector foils. In this state, the ultrasonic horn 131 is pressed against the protective foils 11P-1 and 11P-2 to thereby perform ultrasonic welding.

Next, as shown in FIG. 9, the remaining power collector bundle 11B is laid over the middle connection protective layer 11Pm and the power collector bundle 11A which are integrally welded with the electrode lead 3a. Further, on the remaining power collector bundle 11B, the metal foils 11P-3 and 11P-4 for forming the end connection protective layer 11Pe are placed, and the ultrasonic horn 131 is pressed against the protective metal foils 11P-3 and 11P-4, to thereby similarly perform ultrasonic welding.

The above-mentioned process is repeatedly performed, to thereby laminate and weld (connect) an arbitrary number of the power collector foils 11 on the electrode lead 3a through the protective layer 11P.

After that, the inner electrode couple 1 formed of an arbitrary number of the power collector foils 11 (13) connected with the electrode lead 3a (3b) is contained in the outer wrapper 2, which is filled with an electrolyte solution, and the opening of the outer wrapper 2 is airtightly heat sealed such that the electrode lead 3a (3b) airtightly penetrates the outer wrapper 2, to thereby realize the sheet-type secondary battery 10 which can be easily increased to have a larger capacity.

In this case, the size of a metal foil, for example, forming the connection protective layer 11P (13P) is preferably large enough so as to cover a predetermined welding area defined by the size of the chip 132 on the ultrasonic horn 131, in view of obtaining a sufficient connection strength.

Also, the protective layer 11P (13P) is preferably has a thickness of 10µm or more and 100µm or less, so as to be integrally welded with the laminated power collector foils 11 (13) without necessitating an excessive welding energy.

Further, in the case of laminating and connecting the power collector bundles (11A and 11B in this example) through welding, it is preferable to weld and connect the power collector bundles 11A and 11B in such a manner that at least one-half of the welding region (area) of each of the power collector bundles 11A and 11B overlaps with each other through the middle connection protective layer 11Pm, in view of securing a predetermined current capacity.

As described above, the multilayered power collector foils 11-1, 11-2, ..., are divided to form the power collector bundles 11A, 11B, ..., and the power collector bundles 11A, 11B, ... are welded in sequence through the middle connection protective layer 11Pm, thereby making it possible to set the welding strength more appropriately (so as to be mild enough that does not cause damage to the power collector foils 11-1, 11-2, ...) as compared with the case of welding the power collector foils 11-1, 11-2, ...11-40 all at once, while alleviating the subsidence of the multilayered power collector foils 11-1, 11-2, ..., caused by the welding connection at the welding portion with the electrode lead 3a(3b). With this structure, it is possible to prevent a connection failure from being caused by a crack generated in the power collector foils 11-1, 11-2, ..., at the time of connection, and is also possible to laminate an arbitrary number of the power collector foils 11-1, 11-2, ..., to thereby easily realize a high-output and high-capacity sheet-type secondary battery. Also, as compared with the case of welding each of a small number of the power collector foils in sequence, it is possible to protect the power collector foils to be laminated (particularly, to protect the end portion in the direction of lamination of the power collector foils, the end portion being susceptible to damage) while reducing the number of process steps in the manufacture, to thereby increase productivity.

Further, the connection protective layer 11P is formed of, for example, a plural number of metal foils which are overlaid one another. With this structure, in the event that a destruction of the foil such as a crack is generated in the protective layer 11P, it is possible to perform welding connection while prevent the crack from affecting the power collector foils 11-1, 11-2, ..., and the main body. Accordingly, it is possible to prevent a malfunction such as peeling off of an electrode or a short-circuit between electrodes, and to contribute to stabilize the output of the battery and to increase the capacity thereof. It should be noted that the end connection protective layer 11Pe may be omitted in the case where the power collector bundle overlaid in the end can be welded without causing destruction in the foil (in the case where an appropriate welding condition can be set).

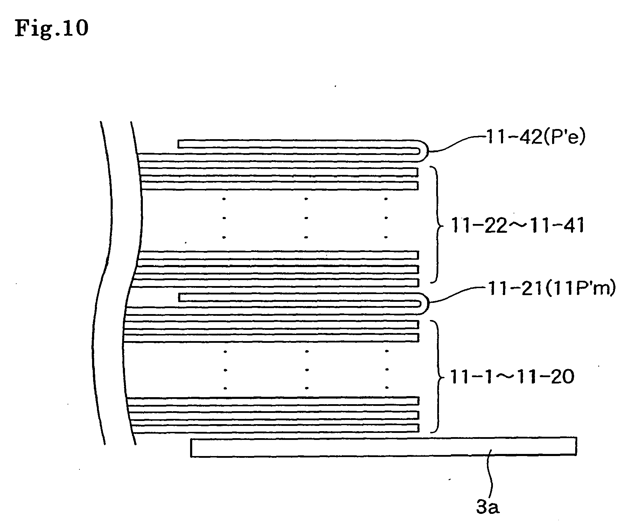

Also, according to this embodiment, the connection protective layer 11P is formed of, for example, the metal foils 11P-1 to 11P-4, but the present invention is not limited to the connection protective layer in the form as described above. For example, the connection protective layer may be formed of a part of the sheet-type electrodes which is folded back at the connection part as shown in FIG. 10. Hereinbelow, a modification example 11P' of the connection protective layer as described above is described with reference to FIG. 10. In FIG. 10, the members each having a similar function to those of the above-mentioned embodiment are denoted by the same reference numerals and the descriptions thereof are omitted. Also, the connection part on the positive side and the connection part on the negative side are similarly structured, and therefore, the connection part on the positive side is cited as an example to be described.

The inner electrode couple 1 of this modification example is formed of, for example, 42 sheets of the positive power collector foils 11-1 to 11-42 as shown in FIG. 10. The thickness of the positive power collector foil and the thickness of the electrode lead are similar to those in the above-mentioned embodiment, and set to 5µm to 30 µm and to 0.3 mm to 5.0 mm, respectively.

In this modification example, power collector foils (in this example, 11-21 and 11-42) to be laminated on the other power collector foils 11 laminated by the number (in this example, each 20 sheets of the power collector foils) with which appropriate lamination and welding can be performed through the protective layers 11P, the number being set in accordance with a predetermined welding energy, are formed to be longer than the other power collector foils (in this example, 11-1 to 11-20, and 11-22 to 11-41) in advance, and the power collector foils 11-21 and 11-42 are bent at the connection part, to thereby form the connection protective layers 11P'.

Specifically, by following the procedure similar to that of the above-mentioned embodiment, a bundle of the power collector foils 11-1 to 11-20 is first laminated on the electrode lead 3a, while the power collector foil 11-21 laminated thereon to form the middle connection protective layer 11P'm is bent (folded back), and all the power collector foils are collectively subjected to ultrasonic welding. After that, 20 sheets of the power collector foils 11-22 to 11-41 are laminated and the power collector foil 11-42 to be laminated thereon is bent to form the end connection protective layer 11P'e, which are placed on the middle connection protective layer 11P'm and the power collector foils 11-1 to 11-20 which have been welded in advance, and similarly subjected to ultrasonic welding, to thereby making it possible to laminate and connect an arbitrary number of the power collector foils 11 and the electrode lead 3a.

In the case of folding back each of the power collector foils 11-21 and 11-42 for forming the connection protective layer 11P, it is preferable to fold back the power collector foil such that the portion thus folded back is large enough to cover a predetermined welding area defined by the size of the chip 132 on the ultrasonic horn 131, in view of attaining a sufficient connection strength.

Further, in the case of laminating and connecting the power collector bundle 11-1 to 11-20 and the power collector bundle 11-22 to 11-41 through welding, it is preferable to weld and connect the power collector bundles 11-1 to 11-20 and 11-22 to 11-41 in such a manner that at least one-half of the welding region (area) thereof overlaps with each other through the power collector foils (in this example, 11-21,11-42) formed through bending, in view of securing a predetermined current capacity.

According to the connection protective layer 11P' of the modification example structured as described above, it is possible to obtain an effect similar to that of the above-mentioned embodiment in which the connection protective layer 11P is formed of additional metal foils 11P-1, 11P-2 etc, while it is not necessary to take the trouble of providing the additional metal foils as the connection protective layer, which makes it easy to form the connection protective layer 11P'.

According to the sheet-type secondary battery 10 and the manufacturing method therefor of the present invention, the thickness and the number of the power collector foils 11(13) and the thickness and the number of the protective foils (for example, 11P-1 to 11P-4) or the power collector foils for forming the protective layer (for example, 11-21 and 11-42) may be arbitrarily set depending on a predetermined welding condition (welding strength). Also, the present invention is not limited to the above-mentioned embodiments, as long as a conductive layer capable of preventing damage such as wear and tear to the sheet-type electrode (power collector foil) in performing welding connection is formed at the connection part in between thereof in the direction of lamination.

## Claims

1. A sheet-type secondary battery, comprising:
a sheet-type inner electrode couple (1) formed by alternately laminating multiple sheet-type positive electrodes (1a;11) and multiple sheet-type negative electrodes (1b;13) through a separator (1c);
a flexible outer wrapper (2) for containing airtightly therein the inner electrode couple and an electrolyte solution (5); and
a positive electrode lead (3a) and a negative electrode lead (3b) connected to each of the multiple sheet-type positive electrodes (1a;11) and the multiple sheet-type negative electrodes (1b;13) of the inner electrode couple in the outer wrapper, wherein:
connection parts between the positive electrode lead (3a) and the multiple sheet-type positive electrodes (1a; 11) and between the negative electrode lead (3b) and the multiple sheet-type negative electrodes (1b;13) are formed by laminating the multiple sheet-type positive electrodes and the multiple sheet-type negative electrodes on the corresponding positive electrode lead and on the corresponding negative electrode lead, respectively, to thereby establish the connections therebetween; and
the connection parts each have a conductive connection protective layer (11Pm; 11P'm) formed in between the laminated multiple sheet-type positive and/or negative electrodes.

2. A sheet-type secondary battery according to claim 1, wherein power collector foils (11-1 to 11-40; 11-1 to 11-42) of the multiple sheet-type positive electrodes (11) and power collector foils of the sheet-type negative electrodes (13) are ultrasonically welded to the corresponding positive electrode lead (3a) and to the corresponding negative electrode lead (3b), respectively, in a state where the connection protective layer (11Pm;11P'm) is formed so as to be inserted in between the power collector foils in a lamination direction thereof.

3. A sheet-type secondary battery according to claim 1 or 2, wherein a said connection protective layer (11Pm;11P'm) is formed for every predetermined number of the multiple sheet-type positive and/or negative electrodes (11,13) laminated.

4. A sheet-type secondary battery according to claim 1, 2 or 3, wherein the number of the multiple sheet-type positive and/or negative electrodes (11,13) to be laminated is set based on a welding strength.

5. A sheet-type secondary battery according to any preceding claim, wherein the connection protective layers (11Pe; 11P'e) are further formed at end portions of the multiple sheet-type positive and/or negative electrodes (11,13) in a lamination direction thereof opposite to the positive and/or negative electrode lead (3a,3b).

6. A sheet-type secondary battery according to any preceding claim, wherein the or each connection protective layer (11 Pm,11 Pe) is formed of a conductive material separately from the multiple sheet-type positive and/or negative electrodes (11-1 to 11-40).

7. A sheet-type secondary battery according to any of claims 1 to 5, wherein the or each connection protective layer (11 P'm,11 P'e) is formed of at least one of the multiple sheet-type positive and/or negative electrodes (11-21,11-42), which is folded back at the connection part.

8. A sheet-type secondary battery according to any preceding claim, wherein each of the connection protective layers (11Pm,11Pe;11P'm,11P'e) is formed of a member made of a material the same as or similar to that of the corresponding multiple sheet-type positive electrodes (11) and that of the corresponding multiple sheet-type negative electrodes (13).

9. A sheet-type secondary battery according to any preceding claim, wherein the positive electrode lead (3a) and the negative electrode lead (3b) each have a thickness of from 0.3 mm or more to 5.0 mm or less.

10. A sheet-type secondary battery according to any preceding claim, wherein:
the multiple sheet-type positive electrodes (11) and the multiple sheet-type negative electrodes (13) each have a thickness of from 5 µm or more to 30 µm or less; and
the number of each of the multiple sheet-type positive and/or negative electrodes to be laminated is equal to or larger than 20.

11. A manufacturing method for a sheet-type secondary battery, comprising:
preparing a sheet-type inner electrode couple (1) which is formed by alternately laminating multiple sheet-type positive electrodes (1a;11) and multiple sheet-type negative electrodes (1b;13) through a separator (1c), a positive electrode lead (3 a) and a negative electrode lead (3b) connected to each of the multiple sheet-type positive electrodes and the multiple sheet-type negative electrodes of the inner electrode couple, and an outer wrapper (2) for containing airtightly therein the inner electrode couple and an electrolyte solution (5);
putting together the multiple sheet-type positive and/or negative electrodes into groups to form multiple bundles (11A, 11B; 11-1 to 11-20, 11-22 to 11-41) of the multiple sheet-type positive and/or negative electrodes;
placing a first one (11 A; 11-1 to 11-20) of the multiple bundles of the sheet-type positive and/or negative electrodes on the positive and/or negative electrode lead (3a;3b);
placing a metal foil (11Pm;11-21) formed of a material the same as or similar to that of the multiple sheet-type positive and/or negative electrodes, on top of the first one (11A;11-1 to 11-20) of the multiple bundles of the multiple sheet-type positive and/or negative electrodes;
collectively subjecting the multiple bundles (11 A; 11-1 to 11-20) of the multiple sheet-type positive and/or negative electrodes, the positive and/or negative electrode lead (3a;3b), and the metal foil (11Pm;11-21) to ultrasonic welding;
placing a second one (11B;11-22 to 11-41) of the multiple bundles of the multiple sheet-type positive and/or negative electrodes on the first one (11A;11-1 to 11-20) of the multiple bundles of the multiple sheet-type positive and/or negative electrodes and the metal foil (11Pm;11-21), which were welded;
placing and ultrasonic welding a metal foil (11 Pe;11-42) on the second one (11B;11-22 to 11-41) of the multiple bundles of the multiple sheet-type positive and/or negative electrodes, the metal foil (11Pe;11-42) being made of a material the same as or similar to that of the multiple sheet-type positive and/or negative electrodes;
repeating the procedure similar to the above to laminate a desired number of sheet-type electrode layers through the metal foil; and
airtightly containing the inner electrode couple (1) and the positive and/or negative electrode lead (3a,3b) integrally connected to the sheet-type electrode layers of the inner electrode couple in the outer wrapper (2) together with the electrolyte solution (5).

12. A manufacturing method for a sheet-type secondary battery according to claim 11, wherein the multiple bundles (11A, 11B; 11-1 to 11-20,11-22 to 11-41) of the multiple sheet-type positive and/or negative electrodes are divided into two or more bundles.

13. A manufacturing method for a sheet-type secondary battery according to claim 11 or 12, wherein at least one of the multiple sheet-type positive and/or negative electrodes (11-21,11-42), which is formed at the top of each of the multiple bundles of the multiple sheet-type positive and/or negative electrodes, is folded back.

14. A manufacturing method for a sheet-type secondary battery according to any of claims 11 to 13, wherein the positive and/or negative electrode lead (3a,3b) has a thickness of from 0.3 mm or more to 5.0 mm or less, the metal foil (11Pm, 11Pe;11-21,11-42) has a total thickness of from 10 µm or more to 100 µm or less, and the positive and/or negative electrode lead and the metal foil are ultrasonically welded so as to cover a predetermined ultrasonic welding area.

15. A manufacturing method for a sheet-type secondary battery according to any of claims 11 to 14, wherein the welding area of the first one (11A;11-1 to 11-20) of the multiple bundles of the multiple sheet-type positive and/or negative electrodes and the welding area of the second one (11B;11-22 to 11-41) of the multiple bundles of the multiple sheet-type positive and/or negative electrodes are welded to each other through the metal foil (11Pm;11-21).
